# EUROPEAN PATENT SPECIFICATION

(11) **EP 3 214 581 B1**
(45) Date of publication and mention of the grant of the patent: **08.05.2019**
(21) Application number: 16158788.6
(22) Date of filing: 04.03.2016
(51) Int. Cl.: G06K 15/00

(54) **IMAGE FORMING APPARATUS**
BILDERZEUGUNGSVORRICHTUNG
APPAREIL DE FORMATION D'IMAGE

(43) Date of publication of application: 06.09.2017
(73) Proprietor: Ricoh Company, Ltd., Tokyo 143-8555 (JP)
(72) Inventor: BEYLOT, Loic, London, NW1 3BF (GB); HIRAKAWA, Takahiro, London, NW1 3BF (GB); RAVEL, Christian, London, NW1 3BF (GB)
(74) Representative: J A Kemp

(56) References cited:
- EP-A2- 2 431 812
- JP-A- 2014 236 263

## Description

The present invention relates to an image forming apparatus adapted to assist use by visually impaired users. In particular the present invention is concerned with the communication of potentially confidential or sensitive information to a visually impaired user.

Image forming apparatuses such as printers, copiers, fax machines or multifunction printers (MFPs) capable of all or some of these functions, which communicate information to a user via speech are known. For example, there exist devices that speak the name of a document in a print queue so that the user can select a desired document to be printed. Also there exists devices that alert a user to an error, e.g. a paper jam, via speech so that the user can resolve the error or request assistance to resolve the error.

However, there are circumstances in which the user may not want information to be communicated to him or her via speech, for example if the information relates to confidential or sensitive material. For example, if the name of a document in a print queue is "employee redundancies" the user may not want this to be communicated via speech in case it might be heard by someone unauthorised to have access to that document. Further, if an error occurs while printing this document, for example a paper jam, the user might not want information about the error to be communicated via speech just in case it is heard by someone else who is unauthorised to have access to that document and who might attempt to resolve the error and see the printed document. Also, if for example the user forgets to remove a printed document from the printer the user might not want this error communicated via speech for the same reason.

JP 2014 2362363 A discloses an image forming apparatus outside the scope of the appended claims.

The present invention is defined by the appended claims and aims to at least partially address some of the problems discussed above.

Further features and advantages of the invention will be described below with reference to exemplary embodiments and the accompanying drawings, in which:
Figure 1 schematically shows an image forming apparatus in accordance with an embodiment of the invention;
Figures 2A and 2B show examples of confidential documents;
Figure 3 is an information flow diagram showing an exemplary process according to the invention;
Figure 4 is an information flow diagram showing an exemplary process according to the invention; and
Figure 5 is an information flow diagram showing an exemplary process according to the invention.

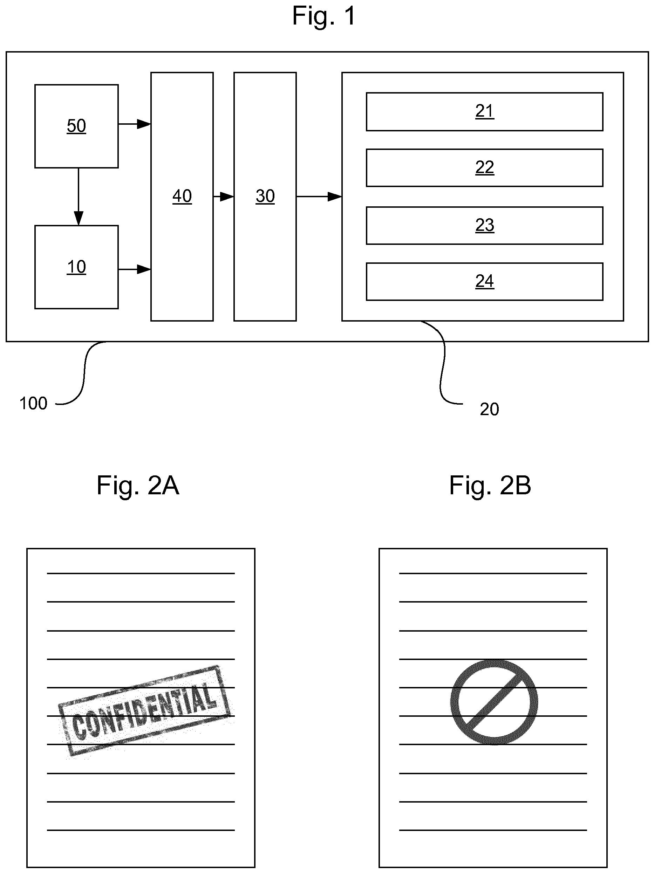

Figure 1 schematically shows an image forming apparatus 100 for forming an image on a recording medium based on document data according to the invention. The recording medium is not limited to any particular recording medium. The recording medium could be paper, card, envelopes, or OHP for example. The method of image formation is not limited to any particular method. For example, the method of image formation could be an inkjet printing method or a laser printing method. The printing may be performed by a printing unit 10. The document data may be transferred to the image forming apparatus 100 over a network from a client device, such as a personal computer. Alternatively, the document data may be transferred to the image forming apparatus 100 in another way, for example via a portable storage device, such as a USB memory device. The apparatus may include a user interface 60 for the user to control the apparatus 100.

The apparatus 100 may comprise a speech unit 20 for communicating information via speech. The speech unit 2 may include a loudspeaker 21. The speech unit 20 may additionally include a connection part 22 for connecting to an external audio device, for example a phone port, for connecting to headphones or a wireless communication device (e.g. a Bluetooth ™ device) for connecting wirelessly headset or phone. The speech unit 20 may comprise a text-to-speech module 23, e.g. GoogleTalk ™, for converting input text data to speech data. The speech unit 20 may include a data storage module 24 storing pre-stored speech data. Speech data is output by the loudspeaker and/or headphones as sound, namely speech.

The apparatus 100 further comprises a confidentiality determining unit 30 for determining whether the document data is confidential. Further details of the confidentiality determining unit 30 are discussed below.

The apparatus 100 may be configured to operate such that the information communicated by the speech unit 20 is dependent on whether or not it is determined that the document data is confidential. In this way, potentially sensitive information is not communicated audibly. Thus the problems with the prior identified above art are avoided.

In a first embodiment, the speech unit 20 may be configured to communicate information about the document data to a user via speech.

Optionally the information may be the name of the document to which the document data corresponds. For example, the image forming apparatus 100 may be configured to communicate the names of documents to be printed so that the user can select a specific document or documents to print via a user interface. In some cases, the names of the documents may include sensitive information. Therefore, in order to avoid communicating this information audibly, different information may be communicated.

For example, if it is determined that the document data is not confidential, the speech unit 20 may communicate un-altered information, and if it is determined that the document data is confidential, the speech unit 20 may communicate altered information. The altered information may be based on the original information. For example, certain words of the original information may be replaced by their initials, replaced by different words, or left out entirely.

Alternatively, the information communicated by the speech unit 20 may be independent of the original information, for example, the original information may be replaced entirely by pre-stored information, e.g. "Confidential Document". Alternatively the original information may be replaced by different information about the document data, for example, the original document size or original document format.

In a second embodiment, the apparatus 100 may further comprise an error determining unit 40 for determining an error by the image forming apparatus 100 or a user of the image forming apparatus 100. In this embodiment the speech unit 20 may, alternatively or additionally, be configured to communicate information about the error to the user via speech. The information communicated by the speech unit 20 is dependent on whether or not it is determined that the document data is confidential. In this way, information which, if communicated audibly, might result in unauthorised people viewing sensitive information, as a result of actions taken to resolve an error, is not communicated audibly.

Optionally, the error may be an error in the conveyance of the recording medium in the apparatus 100. The error determining unit 40 may be capable of determining when an error in the conveyance of the recording medium in the apparatus 100 occurs, for example, a paper jam.

Optionally, the image forming apparatus 100 may comprise a document reading unit 50 for reading a document to acquire the document data. In this case, it is not necessary that the document data actually be printed, for example, the image forming apparatus could be used in a mode whereby a read document is stored on a server or transmitted via email or facsimile.

The document reading unit 50 may be of the conveyance type, where an original document is fed into the reading unit 50. In this case the error may be an error in the conveyance of a document read by the document reading unit. In other words, the error determining unit may be capable of determining when an error in the conveyance of the document to be read by the document reading unit occurs, for example, a paper jam.

Alternatively, the document reading unit 50 may be of the flat-bed type where an original document is placed on a scanning surface. In this case, the error may be a failure to remove a document read by the document reading unit 50 from the apparatus 100. The error determining unit 40 may be configured to determine a failure to remove a read document from the apparatus 100 if a predetermined time has elapsed from forming an image on the recording medium or reading the document.

Optionally, the error may be failure to remove a recording medium on which an image has been formed from the apparatus 100. The error determining unit 40 may be configured to determine a failure to remove a recording medium from the apparatus 100 if a predetermined time has elapsed from forming an image on the recording medium.

If it is determined by the confidentiality determining unit 30, that the document data is not confidential, the speech unit 20 may communicates the information about the error, but if it is determined that the document data is confidential, the speech unit 20 may not communicate the information. Instead of communicating the information about the error, the speech unit 20 may make no communication or, alternatively, communicate information which actively deters people from attending to an error, for example, information noting that the apparatus 100 should not be used.

Optionally, the image forming apparatus 100 may further comprise a remote messenger unit 60 configured to send information about the error to a designated address if the document data is confidential. This allows the error to be dealt with by someone who is authorised to access the potentially sensitive information.

The confidentiality determining unit 30 is described in further detail below.

Optionally, the confidentiality determining unit 30 may determine whether the document data is confidential based on whether or not the document data includes data corresponding to a character string indicating that the document data is confidential. The character string may be determined based on performing optical character recognition (OCR) on the document data. The character string may be a character string in the document name of the document data, the document, or a watermark detected by the confidentiality determining unit 30. The confidentiality determining unit 30 may perform the OCR process on all or part of the document data. For example, only the first page may be subject to the OCR process. This improves processing speed. In the case of document data obtained by the document reading unit 50, the confidentiality determining unit 30 can only asses the confidentiality of a document to the extend that document data has been obtained. For example, if a paper jam occurs in feeding the second page of an original multi-page document into the document reading unit 50, then the confidentiality determining unit 30 can only determine the confidentiality on the basis of the first page, which has been read.

The text obtained by the OCR process may be analysed to identify specific pre-determined character strings which are known to indicate confidential document data. The pre-determined character strings may be stored in the confidentiality determining unit 30 in a list or database. The text obtained by the OCR process may, alternatively or additionally, be analysed to identify character strings with specific pre-determined patterns, which are known to indicate potentially confidential information, e.g. a sixteen digit number may indicate a credit card number. The confidentiality determining unit 30 may use a combination of identifying specific character strings and specific patterns to determine whether a document is confidential more reliably. For example, if the document includes a sixteen digit number and the character string "credit card" it is more likely that the sixteen digit number does correspond to a credit card number rather than some other number which might not be confidential.

In order to improve the reliability of the determination of confidentiality, the confidentiality determining unit 30 may make the determination based on the frequency of the pre-determined character strings. This may be the frequency that the same character string occurs, e.g. the string "confidential", or the frequency at which character strings within a group of different character strings occurs e.g. the group comprising "confidential", "private" and "sensitive".

Optionally, the confidentiality determining unit 30 may be configured to determine whether the document data is confidential based on whether or not the document data includes data corresponding to a watermark indicating that the document data is confidential. For example, the confidentiality determining unit 30 may include software capable of recognising a watermark from the document data. Some documents may be watermarked with characters e.g. "confidential", as shown in Figure 2A. The confidentiality determining unit 30 can determine confidentiality on the basis of these characters as above. Alternatively or additionally, the confidentiality determining unit 30 may be capable of determining whether a watermark includes a particular image indicative of confidentiality (as shown in Figure 2B), e.g. by comparing the watermark image to a database of images known to be indicative of confidential or sensitive information.

Optionally, the confidentiality determining unit 30 may determine that a document is confidential based on settings associated with the document data specified by a user, e.g. the user may select a print job type which indicates that the document is confidential.

In the case that an external device is connected to the connection part 22 of the speech unit 20, the speech unit may output all communication via the connection part 22 rather than the loudspeaker 21. In that case, the speech unit 20 may be configured to operate as if all data is not confidential, i.e. the determination is automatically made that the document data is not confidential. This is because with an external device connected it is assumed that information will only be communicated to the user of the device and is not audible to others.

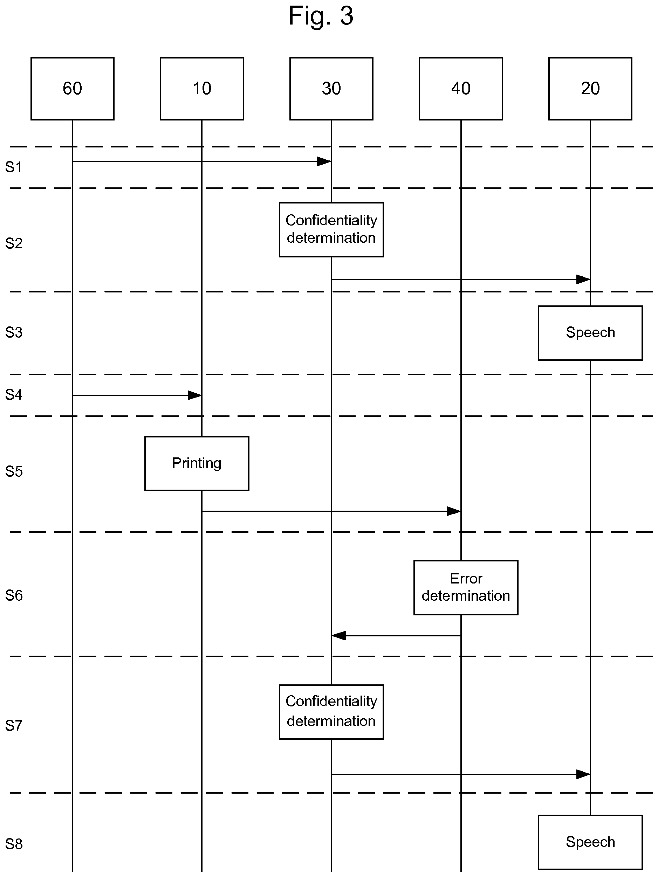

Figure 3 in a diagram showing information flowing between varies parts of the image forming apparatus 100 in an example process in accordance with the present invention. The example relates to a scenario where the image forming apparatus is used for printing. The steps of the process are abbreviated as S.

In S1, the user interface 60 provides document data for a document in a list of documents to be printed to the confidentiality determining unit 30. In S2 the confidentiality determining unit 30 determines whether the document data is confidential and provides the determination result to the speech unit 20. In S3 the speech unit 20 communicates information about the document based on the result of the confidentiality determining unit 30. If the document is not confidential the speech unit communicates the name of the document. If the document is confidential the speech unit communicates the initials of the name of the document. In S4 the user selects a document to be printed via the user interface 60 and document data is provided to the printing unit 10 for printing the document. In S5, the printing unit 10 prints the document and sends information on the status of the printing to the error determining unit. In S6, the error determining unit determines an error has occurred during printing e.g. a paper jam, or after printing is completed, e.g. the user forgets to remove the printed document, the confidentiality determining unit and activates the confidentiality determining unit 20. In S7, the confidentiality determining unit 30 determines whether the document data is confidential and provides the determination result to the speech unit 20. In S8 the speech unit 20 communicates information about the error based on the result of the confidentiality determining unit 30. If the document is not confidential the speech unit communicates the error via speech. If the document is confidential the speech unit sends an email about the error to a designated address.

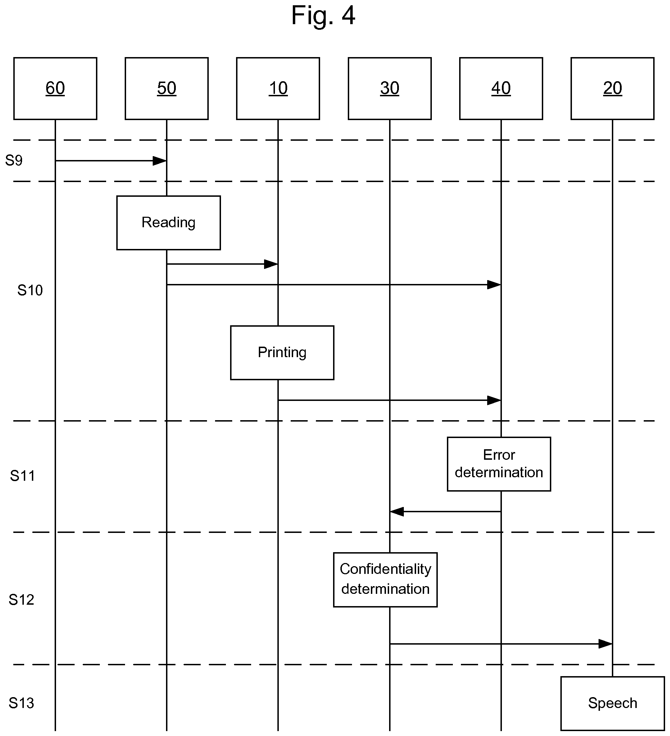

Figure 4 is a diagram showing information flowing between varies parts of the image forming apparatus 100 in another example process in accordance with the present invention. The example relates to a scenario where the image forming apparatus is used for copying.

In S9, the user starts the copy operation via the user interface 60. In S10, the document reading unit begins reading a document to acquire document data which is passed to the printing unit for printing. Information on the status of the reading unit is passed to the error determination unit 40. Meanwhile, the printing unit begins printing the copied document. Information on the status of the printing is sent to the error determining unit 40. In S11, the error determination determines that an error has occurred either in the document reading unit (e.g. a paper jam or the original document being left behind) or the printing unit (e.g. a paper jam or the copied document being left behind) and activates the confidentiality determining unit 20. In S12, the confidentiality determining unit 30 determines whether the document data is confidential and provides the determination result to the speech unit 20. In S13 the speech unit 20 communicates information about the error based on the result of the confidentiality determining unit 30. If the document is not confidential the speech unit communicates the error via speech. If the document is confidential the speech unit sends an email about the error to a designated address.

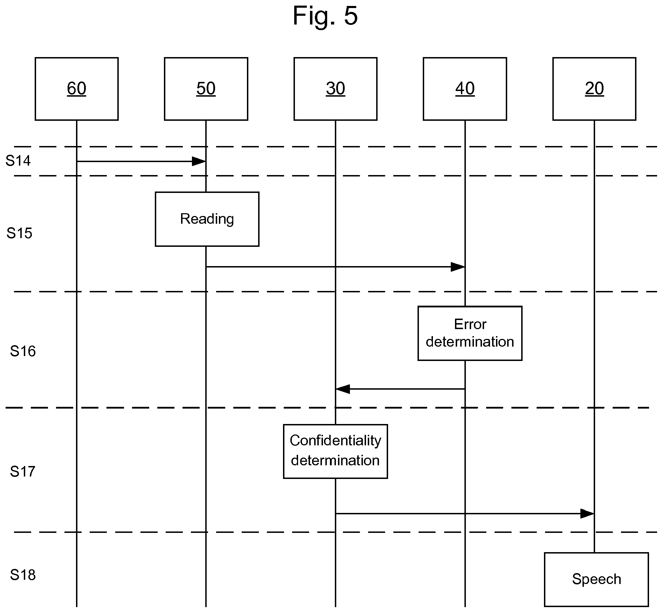

Figure 5 is a diagram showing information flowing between varies parts of the image forming apparatus 100 in another example process in accordance with the present invention. The example relates to a scenario where the image forming apparatus is used for scanning or facsimile.

In S14, the user starts the scanning or facsimile operation via the user interface 60. In S15, the document reading unit begins reading a document to acquire document data. Information on the status of the reading unit is passed to the error determination unit 40. In S16, the error determination determines that an error has occurred either the document reading unit (e.g. a paper jam or the original document being left behind) and activates the confidentiality determining unit 20. In S17, the confidentiality determining unit 30 determines whether the document data is confidential and provides the determination result to the speech unit 20. In S18 the speech unit 20 communicates information about the error based on the result of the confidentiality determining unit 30. If the document is not confidential the speech unit communicates the error via speech. If the document is confidential the speech unit sends an email about the error to a designated address.

Variations of the above described embodiment are possible in light of the above teachings. It is to be understood that the invention may be practised otherwise than specifically described herein without departing from the scope of the invention as defined by the claims.

## Claims

1. An image forming apparatus for forming an image on a recording medium based on document data, the apparatus comprising:
a speech unit for communicating information about the document data to a user via speech; and **characterised by** a confidentiality determining unit for determining whether the document data is confidential;
wherein the information communicated by the speech unit is dependent on whether or not it is determined that the document data is confidential.

2. The image forming apparatus of claim 1, wherein, if it is determined that the document data is not confidential, the speech unit communicates un-altered information, and if it is determined that the document data is confidential, the speech unit communicates altered information.

3. The image forming apparatus of claim 1 or 2, wherein the information is the name of the document to which the document data corresponds.

4. An image forming apparatus for forming an image on a recording medium based on document data, the apparatus comprising:
an error determining unit for determining an error by the image forming apparatus or a user of the image forming apparatus; **characterised by**
a speech unit for communicating information about the error to the user via speech;
a confidentiality determining unit for determining whether the document data is confidential;
wherein the information communicated by the speech unit is dependent on whether or not it is determined that the document data is confidential.

5. The image forming apparatus of claim 4, wherein, if it is determined that the document data is not confidential, the speech unit communicates the information, and
if it is determined that the document data is confidential, the speech unit does not communicate the information.

6. The image forming apparatus of claim 4 or 5, wherein the error is an error in the conveyance of the recording medium in the apparatus; and/or
the apparatus further comprises a document reading unit for reading a document to acquire the document data, wherein the error is an error in the conveyance of a document read by the document reading unit.

7. The image forming apparatus of claims 4 to 6, wherein the error is a failure to remove a recording medium on which an image has been formed or a document to be or having been read, from the apparatus.

8. The image forming apparatus of claims 4 to 8, further comprising a remote messenger unit configured to send information about the error to a designated address if the document data is confidential.

9. The image forming apparatus of any previous claim, wherein the confidentiality determining unit determines whether the document data is confidential based on whether or not the document data includes data corresponding to a watermark including a character string or an image indicating that the document data is confidential.

10. The image forming apparatus of claims of any previous claim, wherein the confidentiality determining unit determines whether the document data is confidential based on whether or not the document data includes data corresponding to a character string or an image indicating that the document data is confidential.

11. The image forming apparatus of claim 9 or 10, wherein the character string is determined based on optical character recognition.

12. The image forming apparatus of any previous claim, wherein the confidentiality determining unit determines whether the document data is confidential based on whether or not a name assigned to the document data includes a character string indicating that the document data is confidential.

13. The image forming apparatus of claims 9 to 12, wherein the character string or image is determined to indicate confidential document data if the character string or image is included in a predefined list or database.

14. A method of communicating information about document data to a user of an image forming apparatus for forming an image on a recording medium based on the document data, comprising
determining whether the document data is confidential;
communicating via speech information dependent on whether or not the document data is determined to be confidential.

15. A method of communicating information about an error to a user of an image forming apparatus for forming an image on a recording medium based on the document data, comprising:
determining whether an error by the document forming apparatus or the user has occurred;
determining whether the document data is confidential;
communicating via speech information dependent on whether or not the document data is determined to be confidential.

## Patentansprüche

1. Bilderzeugungsvorrichtung zum Erzeugen eines Bilds auf einem Aufzeichnungsmedium beruhend auf Dokumentdaten, wobei die Vorrichtung Folgendes umfasst:
eine Spracheinheit zum Übermitteln von Informationen über die Dokumentdaten an einen Benutzer mittels Sprache; und **gekennzeichnet durch** eine Vertraulichkeitsbestimmungseinheit zum Bestimmen, ob die Dokumentdaten vertraulich sind;
wobei die von der Spracheinheit übermittelten Informationen davon abhängen, ob bestimmt wird, dass die Dokumentdaten vertraulich sind oder nicht.

2. Bilderzeugungsvorrichtung nach Anspruch 1, wobei die Spracheinheit, wenn bestimmt wird, dass die Dokumentdaten nicht vertraulich sind, unveränderte Informationen übermittelt, und die Spracheinheit, wenn bestimmt wird, dass die Dokumentdaten vertraulich sind, veränderte Informationen übermittelt.

3. Bilderzeugungsvorrichtung nach Anspruch 1 oder 2, wobei die Information der Name des Dokuments ist, zu dem die Dokumentdaten gehören.

4. Bilderzeugungsvorrichtung zum Erzeugen eines Bilds auf einem Aufzeichnungsmedium beruhend auf Dokumentdaten, wobei die Vorrichtung Folgendes umfasst:
eine Fehlerbestimmungseinheit zum Bestimmen eines Fehlers durch die Bilderzeugungsvorrichtung oder einen Benutzer der Bilderzeugungsvorrichtung; **gekennzeichnet durch**
eine Spracheinheit zum Übermitteln von Informationen über den Fehler an den Benutzer mittels Sprache;
eine Vertraulichkeitsbestimmungseinheit zum Bestimmen, ob die Dokumentdaten vertraulich sind;
wobei die von der Spracheinheit übermittelten Informationen davon abhängen, ob bestimmt wird, dass die Dokumentdaten vertraulich sind oder nicht.

5. Bilderzeugungsvorrichtung nach Anspruch 4, wobei die Spracheinheit, wenn bestimmt wird, dass die Dokumentdaten nicht vertraulich sind, die Informationen übermittelt, und
wenn bestimmt wird, dass die Dokumentdaten vertraulich sind, die Sprecheinheit die Informationen nicht übermittelt.

6. Bilderzeugungsvorrichtung nach Anspruch 4 oder 5, wobei der Fehler ein Fehler bei der Übertragung des Aufzeichnungsmediums in der Vorrichtung ist; und/oder
die Vorrichtung ferner eine Dokumentenleseeinheit zum Lesen eines Dokuments umfasst, um die Dokumentdaten zu erfassen, wobei der Fehler ein Fehler bei der Übertragung eines Dokuments ist, das von der Dokumentenleseeinheit gelesen wird.

7. Bilderzeugungsvorrichtung nach den Ansprüchen 4 bis 6, wobei der Fehler ein Scheitern ist, ein Aufzeichnungsmedium, auf dem ein Bild erzeugt wurde, oder ein Dokument, das gelesen werden soll oder gelesen wurde, aus der Vorrichtung zu entfernen.

8. Bilderzeugungsvorrichtung nach den Ansprüchen 4 bis 8, ferner umfassend eine Remote-Benachrichtigungseinheit, die konfiguriert ist, um Informationen über den Fehler an eine bestimmte Adresse zu senden, wenn die Dokumentdaten vertraulich sind.

9. Bilderzeugungsvorrichtung nach einem vorherigen Anspruch, wobei die Vertraulichkeitsbestimmungseinheit bestimmt, ob die Dokumentdaten vertraulich sind, beruhend darauf, ob die Dokumentdaten Daten enthalten, die einem Wasserzeichen entsprechen, das eine Zeichenkette oder ein Bild beinhaltet, die/das angibt, dass die Dokumentdaten vertraulich sind.

10. Bilderzeugungsvorrichtung nach den Ansprüchen eines vorherigen Anspruchs, wobei die Vertraulichkeitsbestimmungseinheit bestimmt, ob die Dokumentdaten vertraulich sind, beruhend darauf, ob die Dokumentdaten Daten enthalten, die einer Zeichenkette oder einem Bild entsprechen, die/das angibt, dass die Dokumentdaten vertraulich sind.

11. Bilderzeugungsvorrichtung nach Anspruch 9 oder 10, wobei die Zeichenkette beruhend auf der optischen Zeichenerkennung bestimmt wird.

12. Bilderzeugungsvorrichtung nach einem vorherigen Anspruch, wobei die Vertraulichkeitsbestimmungseinheit bestimmt, ob die Dokumentdaten vertraulich sind, beruhend darauf, ob ein Name, der den Dokumentdaten zugeordnet ist, eine Zeichenkette enthält, die angibt, dass die Dokumentdaten vertraulich sind.

13. Bilderzeugungsvorrichtung nach den Ansprüchen 9 bis 12, wobei die Zeichenkette oder das Bild bestimmt wird, dass sie/es vertrauliche Dokumentdaten angibt, wenn die Zeichenkette oder das Bild in einer vordefinierten Liste oder Datenbank enthalten ist.

14. Verfahren zum Übermitteln von Informationen über Dokumentdaten an einen Benutzer einer Bilderzeugungsvorrichtung zum Erzeugen eines Bilds auf einem Aufzeichnungsmedium beruhend auf den Dokumentdaten, umfassend
Bestimmen, ob die Dokumentdaten vertraulich sind;
Übermitteln von Informationen mittels Sprach, abhängig davon, ob die Dokumentdaten so bestimmt sind, dass sie vertraulich sind oder nicht.

15. Verfahren zum Übermitteln von Informationen über einen Fehler an einen Benutzer einer Bilderzeugungsvorrichtung zum Erzeugen eines Bilds auf einem Aufzeichnungsmedium beruhend auf den Dokumentdaten, umfassend:
Bestimmen, ob ein Fehler durch die Dokumenterzeugungsvorrichtung oder den Benutzer aufgetreten ist;
Bestimmen, ob die Dokumentdaten vertraulich sind;
Übermitteln von Informationen mittels Sprach, abhängig davon, ob die Dokumentdaten so bestimmt sind, dass sie vertraulich sind oder nicht.

## Revendications

1. Appareil de formation d'image destiné à former une image sur un support d'enregistrement sur la base de données de document, l'appareil comprenant :
une unité vocale destinée à communiquer une information concernant les données de document à un utilisateur par l'intermédiaire de la parole ; et **caractérisé par** une unité de détermination de la confidentialité destinée à déterminer si les données de document sont confidentielles ;
où l'information communiquée par l'unité vocale dépend du fait qu'il est déterminé ou non que les données de document sont confidentielles.

2. Appareil de formation d'image selon la revendication 1, dans lequel, s'il est déterminé que les données de document ne sont pas confidentielles, l'unité vocale communique une information non modifiée, et s'il est déterminé que les données de document sont confidentielles, l'unité vocale communique une information modifiée.

3. Appareil de formation d'image selon la revendication 1 ou la revendication 2, dans lequel l'information est le nom du document auquel correspondent les données de document.

4. Appareil de formation d'image destiné à la formation d'une image sur un support d'enregistrement sur la base de données de document, l'appareil comprenant :
une unité de détermination d'erreur destinée à déterminer une erreur faite par l'appareil de formation d'image ou un utilisateur de l'appareil de formation d'image ; **caractérisé par**
une unité vocale destinée à communiquer l'information concernant l'erreur à l'utilisateur par l'intermédiaire de la parole ;
une unité de détermination de la confidentialité destinée à déterminer si les données de document sont confidentielles ;
où l'information communiquée par l'unité vocale dépend du fait qu'il est déterminé ou non que les données de document sont confidentielles.

5. Appareil de formation d'image selon la revendication 4, dans lequel, s'il est déterminé que les données de document ne sont pas confidentielles, l'unité vocale communique l'information, et
s'il est déterminé que les données de document sont confidentielles, l'unité vocale ne communique pas l'information.

6. Appareil de formation d'image selon la revendication 4 ou la revendication 5, dans lequel l'erreur est une erreur dans l'acheminement du support d'enregistrement dans l'appareil ; et/ou
l'appareil comprend en outre une unité de lecture de document destinée à la lecture d'un document pour acquérir les données de document, où l'erreur est une erreur dans l'acheminement d'un document lu par l'unité de lecture de document.

7. Appareil de formation d'image selon les revendications 4 à 6, dans lequel l'erreur est une défaillance pour retirer de l'appareil un support d'enregistrement sur lequel une image a été formée ou un document à lire ou qui a été lu.

8. Appareil de formation d'image selon les revendications 4 à 8, comprenant en outre une unité de messagerie à distance configurée pour envoyer l'information concernant l'erreur à une adresse désignée si les données de document sont confidentielles.

9. Appareil de formation d'image selon une quelconque revendication précédente, dans lequel l'unité de détermination de la confidentialité détermine si les données de document sont confidentielles selon que les données de document contiennent ou non les données correspondant à un marquage comprenant une chaîne de caractères ou une image indiquant que les données de document sont confidentielles.

10. Appareil de formation d'image selon les revendications selon une quelconque revendication précédente, dans lequel l'unité de détermination de la confidentialité détermine si les données de document sont confidentielles selon que les données de document contiennent ou non les données correspondant à une chaîne de caractères ou à une image indiquant que les données de document sont confidentielles.

11. Appareil de formation d'image selon la revendication 9 ou la revendication 10, dans lequel la chaîne de caractères est déterminée sur la base d'une reconnaissance optique des caractères.

12. Appareil de formation d'image selon une quelconque revendication précédente, dans lequel l'unité de détermination de la confidentialité détermine si les données de document sont confidentielles selon qu'un nom affecté aux données de document contient ou non une chaîne de caractères indiquant que les données de document sont confidentielles.

13. Appareil de formation d'image selon les revendications 9 à 12, dans lequel la chaîne de caractères ou l'image sont déterminées pour indiquer les données de document confidentielles si la chaîne de caractères ou l'image sont contenues dans une liste prédéfinie ou dans une base de données.

14. Procédé de communication de l'information concernant les données de document à un utilisateur d'un appareil de formation d'image destiné à former une image sur un support d'enregistrement sur la base de données de document, comprenant :
le fait de déterminer si les données de document sont confidentielles ;
la communication par l'intermédiaire d'une information vocale s'il est déterminé ou non que les données de document sont confidentielles.

15. Procédé de communication de l'information concernant une erreur à un utilisateur d'un appareil de formation d'image destiné à former une image sur un support d'enregistrement sur la base de données de document, comprenant :
le fait de déterminer si une erreur, faite par l'appareil de formation du document ou par l'utilisateur, est survenue ;
le fait de déterminer si les données de document sont confidentielles ;
la communication par l'intermédiaire de l'information vocale selon qu'il est déterminé ou non que les données de document sont confidentielles.
